(19) Europäisches Patentamt
European Patent Office
Office européen des brevets

(11) **EP 3 235 093 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(21) Anmeldenummer: **15704268.0**

(22) Anmeldetag: **04.02.2015**

(51) Int Cl.:
**H02J 3/36** *(2006.01)*

(86) Internationale Anmeldenummer:
**PCT/EP2015/052299**

(87) Internationale Veröffentlichungsnummer:
**WO 2016/124234 (11.08.2016 Gazette 2016/32)**

(54) **VERFAHREN ZUR REGELUNG DES LEISTUNGSFLUSSES IN EINEM GLEICHSPANNUNGSNETZ SOWIE VORRICHTUNG ZUM DURCHFÜHREN DES VERFAHRENS**

METHOD FOR CONTROLLING THE POWER FLOW IN A DC VOLTAGE NETWORK AND APPARATUS FOR CARRYING OUT THE METHOD

PROCÉDÉ DE RÉGULATION DU FLUX D'ÉNERGIE DANS UN RÉSEAU DE TENSION CONTINUE ET DISPOSITIF POUR METTRE EN OEUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.10.2017 Patentblatt 2017/43**

(73) Patentinhaber: **Siemens Aktiengesellschaft 80333 München (DE)**

(72) Erfinder:
• **DÖRING, David**
  **91058 Erlangen (DE)**
• **EBNER, Günter**
  **91239 Henfenfeld (DE)**
• **WÜRFLINGER, Klaus**
  **90419 Nürnberg (DE)**
• **ZELLER, Marcus**
  **91056 Erlangen (DE)**

(56) Entgegenhaltungen:
**WO-A1-2012/000549      DE-A1- 1 588 750**

• **JOHNSON B K ET AL: "Expandable Multiterminal DC Systems Based On Voltage Droop", IEEE TRANSACTIONS ON POWER DELIVERY, IEEE SERVICE CENTER, NEW YORK, NY, US, Bd. 8, Nr. 4, 31. Oktober 1993 (1993-10-31), Seiten 1926-1932, XP002631393, ISSN: 0885-8977**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Leistungsregelung in einem eine Mehrzahl von Umrichtern verbindenden Gleichspannungsnetz.

Gleichspannungsnetze und deren Betrieb gehören zu den wichtigen Entwicklungen auf dem Gebiet der Hochspannungsgleichstromübertragungstechnik. Künftig wird in solchen Gleichspannungsnetzen, die als sogenannte Multiterminal-Systeme oder auch vermaschte Netze realisiert werden, ein Teil der Energieübertragung und -versorgung stattfinden. Die durch das Gleichspannungsnetz verbundenen Umrichter können dabei als Gleich- oder Wechselrichter arbeiten.

Die Leistungsregelung, also die Regelung des Leistungsflusses im Gleichspannungsnetz hat üblicherweise die Funktion, für eine Stabilisierung des Gleichspannungsnetzes bei Überspeisung, die zu einer Überspannung im Gleichspannungsnetz führen kann und/oder bei Unterspeisung, wenn mehr Leistung dem Gleichspannungsnetz entnommen als dort hineingespeist wird, zu sorgen. Dazu wird meist ein lokal gemessener Spannungs- und/oder Leistungs-Messwert herangezogen. In der Praxis können die notwendigen Messwerte jedoch technologiebedingt meist nicht exakt erfasst werden. Sie sind vielmehr mit einer systematischen Abweichung behaftet. Dies kann zu erheblichen Leistungsverschiebungen zwischen den Stationen führen. Ein Auftreten von ohmschen Spannungsfällen entlang von Gleichspannungsleitungen des Gleichspannungsnetzes führt beispielsweise zu unterschiedlichen Messergebnissen an den durch die betroffenen Gleichspannungsleitungen verbundenen Umrichtern. Die systematischen Abweichungen der Messwerte sind demnach ohne Weiteres nicht vermeidbar und nicht beherrschbar.

Ein Verfahren nach dem Oberbegriff des Anspruchs 1 ist aus der WO 2012/000549 A1 bekannt.

Die Aufgabe der Erfindung ist es, eine Leistungsregelung in einem artgemäßen Gleichspannungsnetz vorzuschlagen, die einen sicheren und zuverlässigen Betrieb im Gleichspannungsnetz ermöglicht.

Die Aufgabe wird erfindungsgemäß durch ein artgemäßes Verfahren gelöst, bei dem wenigstens dem ersten Umrichter eine Statik für eine Regelgröße des ersten Umrichters zugeordnet wird, jedem der Umrichter ein lokaler Regelfehler zugeordnet wird, wobei der lokale Regelfehler einer Differenz zwischen einem am Umrichter gemessenen Istgrößenwert und einem dem Umrichter zugeordneten Sollgrößenwert entspricht, und die Statik des ersten Umrichters in Abhängigkeit von einer Korrekturgröße korrigiert wird, wobei die Korrekturgröße als eine Differenz zwischen einer Vergleichsgröße und dem lokalen Regelfehler des ersten Umrichters gebildet wird, wobei die Vergleichsgröße von einem lokalen Regelfehler wenigstens eines weiteren Umrichters abgeleitet wird, und wobei die Statik derart korrigiert wird, dass sich der Absolutbetrag der Korrekturgröße verringert.

Zur Regelung des ersten Umrichters ist demnach eine Regelgröße vorgegeben. Die Regelgröße kann beispielsweise eine Spannung, ein Strom oder auch eine mittels des ersten Umrichters übertragene Leistung sein. Die Regelgröße soll auf einen vorgegebenen Sollgrößenwert geregelt werden. Dazu wird der momentan gemessene Istgrößenwert der Regelgröße mit dem Sollgrößenwert verglichen und eine gebildete Differenz als Regelfehler an einen geeigneten Regler gegeben. Mittels des Reglers wird eine Stellgröße der Regelung derart eingestellt, dass die Regelgröße ihrem Wert nach sich dem Sollgrößenwert zumindest annähert. Die Stellgröße kann beispielsweise durch eine am Umrichter eingestellte Spannung gegeben sein.

Die Statik ist eine eineindeutige, vorzugsweise lineare, Regelkennlinie. Die Regelkennlinie gibt den Wert der Stellgröße für den gemessenen Istgrößenwert vor. Dies kann im einfachsten Fall beispielsweise mittels eines Kennliniengliedes realisiert werden.

Es sind unterschiedliche Statiken denkbar, beispielsweise eine Spannungs-Strom-Statik oder eine Spannungs-Leistungsstatik.

Gemäß der Erfindung wird die Statik dazu verwendet, den lokalen Regelfehler möglichst auf den Wert der Vergleichsgröße zusätzlich zu regeln. In der Vergleichsgröße wird dabei der lokale Regelfehler wenigstens eines weiteren Umrichters im Gleichspannungsnetz berücksichtigt. Auf diese Weise kann der Ursache der Regelfehler entgegengewirkt werden und insgesamt der Leistungsfluss im Gleichspannungsnetz gleichmäßiger auf die durch das Gleichspannungsnetz verbundenen Umrichter verteilt werden.

Gemäß einer bevorzugten Ausführungsform der Erfindung ist die Statik eine Spannungs-Leistungsstatik, wobei die Regelgröße einer am ersten Umrichter übertragenen elektrischen Leistung entspricht. Dementsprechend ist die am ersten Umrichter gleichspannungsseitig eingestellte Spannung die Stellgröße der Regelung.

Zu dem vorgegebenen Sollgrößenwert, der vorzugsweise ein Leistungssollwert ist, kann auch ein Spannungssollwert vorgegeben sein, der vom ersten Umrichter eingehalten werden soll. In diesem Fall legt die Vorgabe des Leistungssollwertes und des Spannungssollwertes den Verlauf der Regelkennlinie, zusammen mit einer entsprechenden Funktionsvorschrift, fest. Die Statik kann demensprechend in einem Leistungs-Spannungsdiagramm grafisch dargestellt werden. Gemäß dem gemessenen Istgrößenwert, hier einem Leistungsistwert, kann anhand der Regelkennlinie die einzustellende Spannung abgelesen werden, beziehungsweise mittels des Kennliniengliedes abgeleitet werden.

Vorzugsweise ist die Statik durch eine lineare Regelkennlinie gegeben, wobei die Korrektur einer Parallelverschiebung der Regelkennlinie entspricht. In einem Spannungs-Leistungsdiagramm, in dem die Leistung auf der Abszisse und die Spannung auf der Ordinate verzeichnet sind, ist demnach die Statik durch eine Gerade bzw. eine Schar von Geraden definiert. Für einen als Wechselrichter arbeitenden Umrichter weist die Gerade geeigneterweise eine positive Steigung auf. Für einen als Gleichrichter arbeitenden Umrichter weist die Gerade geeigneterweise eine negative Steigung auf. Bei einer Statik mit positiver Steigung bedeutet eine Parallelverschiebung der Regelkennlinie in Richtung zu größeren Spannungswerten hin, dass bei einem gegebenen Leistungsistwert grundsätzlich eine höhere Spannung am Umrichter eingestellt wird. Dies hat beim als Wechselrichter arbeitenden Umrichter zur Folge, dass bedingt durch die höher eingestellte (gleichspannungsseitige) Spannung der Umrichter weniger Leistung aus dem Gleichspannungsnetz in ein wechselspannungsseitig des Umrichters angeschlossenes Wechselspannungsnetz überträgt. Die Leistung an diesem Umrichter wird also im Absolutbetrag sinken. Dieser Umstand kann dazu genutzt werden, den lokalen Regelfehler des ersten Umrichters an die Vergleichsgröße anzupassen.

Für die nachfolgende Erklärung wird von dem Beispiel ausgegangen, dass der Regelfehler ein Leistungsfehler ist, also die Differenz zwischen dem Leistungsistwert und dem Leistungssollwert. Ist der Regelfehler am ersten Umrichter zum Beispiel stets kleiner als die Vergleichsgröße, was einer positiven Korrekturgröße entspricht, so muss die Statik derart verändert werden, dass der Regelfehler zunimmt. Dazu muss die Leistung am ersten Umrichter erhöht werden. Arbeitet der erste Umrichter als Wechselrichter, so bedeutet dies, dass der erste Umrichter mehr Leistung aus dem Gleichspannungsnetz in das dem ersten Umrichter zugeordnete Wechselspannungsnetz einspeist. Um dies zu erreichen, muss die Spannung am ersten Umrichter grundsätzlich niedriger eingestellt werden. Dies kann erreicht werden, indem die Regelkennlinie zu geringeren Spannungen hin verschoben wird. Dies kann bildlich entweder durch Verschiebung des gleichen Werts "Psoll" zu einem niedrigeren Wert "Usoll" geschehen (Verschiebung der Kennlinie "nach unten") oder aber durch Festhalten des gleiches Werts "Usoll" und Erhöhung des zugehörigen Werts "Psoll" (Verschiebung "nach rechts").

Entsprechend diesem Beispiel können Regeln für die Korrekturen der Statik für negative Korrekturgrößen abgeleitet werden.

Die den Umrichtern im Gleichspannungsnetz zugeordneten lokalen Regelfehler müssen nicht direkt einem Fehler in der Regelgröße entsprechen. Der lokale Regelfehler kann vielmehr jeder mit einem systematischen Fehler behafteten Messgröße abgeleitet werden. Da beispielsweise sowohl die Leistungsmessung als auch die Spannungsmessung mit einem systematischen Fehler behaftet sein können, ist es denkbar, mittels der Korrektur der Statik sowohl die Spannung als auch die Leistung an einen Vergleichswert anzupassen. Dementsprechend können die lokalen Regelfehler lokale Leistungsfehler, lokale Spannungsfehler oder aber auch Linearkombinationen von Leistungs- und Spannungsfehlern sein. Die Faktoren der Linearkombinationen sind dabei derart zu wählen, dass sie die unterschiedlichen Einheiten der Leistung und der Spannung normieren.

Es bestehen mehrere Möglichkeiten, die Vergleichsgröße zur Berechnung der Korrekturgröße zu definieren. Gemäß einer bevorzugten Ausführungsform der Erfindung entspricht die Vergleichsgröße einem Mittelwert der lokalen Regelfehler. Der Mittelwert der lokalen Regelfehler kann beispielsweise durch Addition des lokalen Regelfehlers des ersten Umrichters und des lokalen Regelfehlers des weiteren Umrichters sowie eine entsprechende Normierung der berechneten Summe bestimmt werden. Werden die lokalen Regelfehler im allgemeinen Fall mit $\Delta X1$, $\Delta X2$ bezeichnet, so gilt für deren Mittelwert $\Delta Xmittel$, dass $\Delta Xmittel = 1/2 * (\Delta X1 + \Delta X2)$. Es ist ebenfalls möglich, den Mittelwert aller lokalen Regelfehler aller Umrichter im Gleichspannungsnetz einzusetzen oder den Mittelwert der lokalen Regelfehler einer vorbestimmten Untergruppe der Umrichter. Falls beispielsweise N Umrichter zur Bestimmung der Vergleichsgröße herangezogen werden, so kann der Mittelwert gemäß der folgenden Formel berechnet werden: $\Delta Xmittel = 1/N * (\Delta X1 + \Delta X2 + ... + \Delta XN)$. Dabei gibt es wiederum mehrere Möglichkeiten, den Mittelwert aus den lokalen Regelfehlern zu bestimmen.

Gemäß einer Ausführungsform wird der lokale Regelfehler des weiteren Umrichters an den ersten Umrichter übertragen und der Mittelwert mittels eines Mittelwertbildners des ersten Umrichters berechnet. Somit wird der Mittelwert in einer geeigneten Recheneinheit des ersten Umrichters berechnet. Es ist denkbar, dass alle Umrichter ihren lokalen Regelfehler an alle übrigen Umrichter übertragen, so dass der Mittelwert in einer Recheneinheit in jedem der Umrichter berechenbar ist. Die Berechnung des Mittelwertes erfolgt also dezentral. Auf eine zentrale Recheneinheit zur Berechnung des Mittelwertes kann demnach verzichtet werden.

Gemäß einer weiteren Ausführungsform werden die lokalen Regelfehler an eine zentrale Master-Station übertragen, wobei der Mittelwert in der zentralen Master-Station berechnet wird. Die Berechnung des Mittelwertes erfolgt also zentral, was vorteilhaft die Menge der zu übertragenden Daten minimiert.

Gemäß einer dritten Ausführungsform wird der Mittelwert dezentral im ersten Umrichter berechnet, wobei die Berechnung iterativ durchgeführt wird. Demnach wird in einer dazu eingerichteten Einheit eine Teilkorrekturgröße T1 des ersten Umrichters berechnet, wobei die Teilkorrekturgröße T1 des ersten Umrichters gleich der Summe des lokalen Regelfehlers $\Delta X1$ des ersten Umrichters und einer Summengröße S1 des ersten Umrichters ist, wobei die Summengröße S1 von einer zuvor berechneten, an den ersten Umrichter übertragenen Übertragungsgröße U21 des weiteren Umrichters abhängig ist, eine vom ersten Umrichter an den weiteren Umrichter zu übertragende Übertragungsgröße U12 als Differenz zwischen der Teilkorrekturgröße T1 des ersten Umrichters und der vom weiteren Umrichter an den ersten Umrichter übertragenen Übertragungsgröße U21 berechnet wird und diese anschließend an den weiteren Umrichter übertragen wird, eine Teilkorrekturgröße T2 des weiteren Umrichters als Summe des lokalen Regelfehlers ΔX2 des weiteren Umrichters und einer Summengröße S2 des weiteren Umrichters neu berechnet wird, wobei die Summengröße S2 von der vom ersten Umrichter übertragenen Übertragungsgröße U12 abhängig ist, die an den ersten Umrichter zu übertragende Übertragungsgröße U21 des weiteren Umrichters als Differenz zwischen der Teilkorrekturgröße T2 des weiteren Umrichters und der vom ersten Umrichter an den weiteren Umrichter übertragenen Übertragungsgröße U12 neu berechnet wird und diese anschließend an den ersten Umrichter übertragen wird und der Mittelwert nach einer vorbestimmten Anzahl von Iterationsschritten durch Normierung der Teilkorrekturgröße T1 des ersten Umrichters abgeleitet wird. Die iterative Berechnung hat den Vorteil, dass die Information lediglich zwischen ortsnah angeordneten Umrichtern ausgetauscht werden muss.

Sind mehrere, beispielsweise N Umrichter des Gleichspannungsnetzes an der Korrektur ihnen jeweils zugeordneter Statiken beteiligt, so wird diese Methode auf diese N Umrichter erweitert. Dazu wird vorausgesetzt, dass die Umrichter miteinander kommunizieren können, also Daten untereinander austauschen können. Die Umrichter bilden also ein Kommunikationsnetzwerk aus, wobei die Umrichter Netzwerkknoten und Kommunikationswege zwischen den Umrichtern Netzwerkkanten des Kommunikationsnetzwerks ausbilden. Zur Bestimmung des Mittelwertes der lokalen Regelfehler werden nicht alle möglichen Kommunikationswege benötigt. Vielmehr wird das Kommunikationsnetzwerk derart definiert, dass alle Umrichter miteinander (zumindest mittelbar) verbunden sind, das Kommunikationsnetzwerk jedoch keine Masche ausbildet. Dies hat den Vorteil, dass bei Ausfall eines der Kommunikationswege eine bis dato nicht verwendete Verbindung zur Übertragung von Daten zwischen Umrichtern in das Kommunikationsnetzwerk aufgenommen werden kann, so dass in diesem Fall durch eine Neudefinition des Kommunikationsnetzwerks die Funktion der Berechnung des Mittelwerts erhalten werden kann.

Die Berechnung der zuvor beschriebenen Zwischengrößen des Verfahrens kann anhand der folgenden Formeln für den k-ten Umrichter, 1 <= k <= N zusammengefasst werden:

$$Tk = \Sigma Uik + \Delta Xk;$$

$$Uki = Tk - Uik,$$

wobei Tk die Teilkorrekturgröße des k-ten Umrichters, ΔXk den lokalen Regelfehler des k-ten Umrichters bezeichnet, i stellvertretend für einen Index zu verstehen ist, der über alle Umrichter ausser dem k-ten Umrichter läuft und Uik die zuvor berechnete, vom i-ten Umrichter an den k-ten Umrichter übermittelte Übertragungsgröße und das ∑ eine übliche Summation über i als Index bedeutet (∑Uik = U1k + ... + UNk, i ungleich k).

Es ist anzumerken, dass bei diesem Verfahren bereits im allerersten Iterationsschritt die Übertragungsgrößen einen definierten Wert haben müssen. Es ist jedoch ausreichend, wenn beispielsweise Uik = 0 für alle i in diesem ersten Schritt des Verfahrens gesetzt wird.

Für den k-ten Umrichter nähert sich nach einigen Iterationsschritten der Wert Tk/N dem Mittelwert aller lokalen Regelfehler der N Umrichter. Wird der Wert Ti/N in allen Umrichtern auf diese Weise berechnet, so ist der auf diese Weise ermittelte Mittelwert in allen Umrichtern gleich.

Gemäß einer Ausführungsform der Erfindung wird die Korrekturgröße aus den lokalen Regelfehlern wenigstens zweier weiterer Umrichter als Differenz zwischen einem Mittelwert der Regelfehler der wenigstens zwei weiteren Umrichter und dem Regelfehler des ersten Umrichters gebildet wird. Dies bedeutet, dass beispielsweise anstelle eines globalen Mittelwertes der lokalen Regelfehler aller Umrichter lediglich ein lokaler Mittelwert über am ersten Umrichter ortsnah angeordneten Umrichter berechnet wird.

Bevorzugt werden mehreren Umrichten des Gleichspannungsnetzes, vorzugsweise allen Umrichtern des Gleichspannungsnetzes, zugeordnete Statiken korrigiert, wobei die Korrekturen unter der Bedingung erfolgen, dass eine Gesamtleistung im Gleichspannungsnetz konstant bleibt. Die Gesamtleistung ergibt sich aus einer Summe aller in das Gleichspannungsnetz eingespeisten und dem Gleichspannungsnetz entnommenen elektrischen Leistung.

Die Erfindung betrifft ferner eine Vorrichtung zum Übertragen elektrischer Leistung umfassend ein Gleichspannungsnetz, das eine Mehrzahl von Umrichtern verbindet.

Die Aufgabe der Erfindung ist es, eine artgemäße Vorrichtung vorzuschlagen, mit der eine möglichst zuverlässige Leistungsübertragung möglich ist.

Die Aufgabe wird bei einer artgemäßen Vorrichtung dadurch gelöst, dass die Vorrichtung eine Regelungseinheit umfasst, die dazu eingerichtet ist, das zuvor beschriebene Verfahren durchzuführen.

Mittels der erfindungsgemäßen Vorrichtung lassen sich alle Vorteile erzielen, die bereits im Zusammenhang mit dem erfindungsgemäßen Verfahren beschrieben wurden.

Die Erfindung soll im Folgenden anhand von Ausführungsbeispielen, die in den Figuren 1 - 7 dargestellt sind, ferner erläutert werden.

Figur 1 zeigt ein Beispiel eines Verzweigten Gleichspannungsnetzes ohne Maschen in schematischer Darstellung;

Figur 2 zeigt ein Beispiel einer Statik zur Regelung eines Umrichters in schematischer Darstellung;

Figur 3 zeigt ein Ausführungsbeispiel eines Verfahrens gemäß der Erfindung in schematischer Darstellung;

Figur 4 zeigt ein erstes Beispiel einer Bestimmung eines mittleren Leistungsfehlers in schematischer Darstellung;

Figur 5 zeigt ein zweites Beispiel der Bestimmung des mittleren Leistungsfehlers in schematischer Darstellung;

Figur 6 zeigt ein drittes Beispiel der Bestimmung des mittleren Leistungsfehlers in schematischer Darstellung;

Figur 7 zeigt ein Beispiel einer Bestimmung einer Vergleichsgröße in schematischer Darstellung;

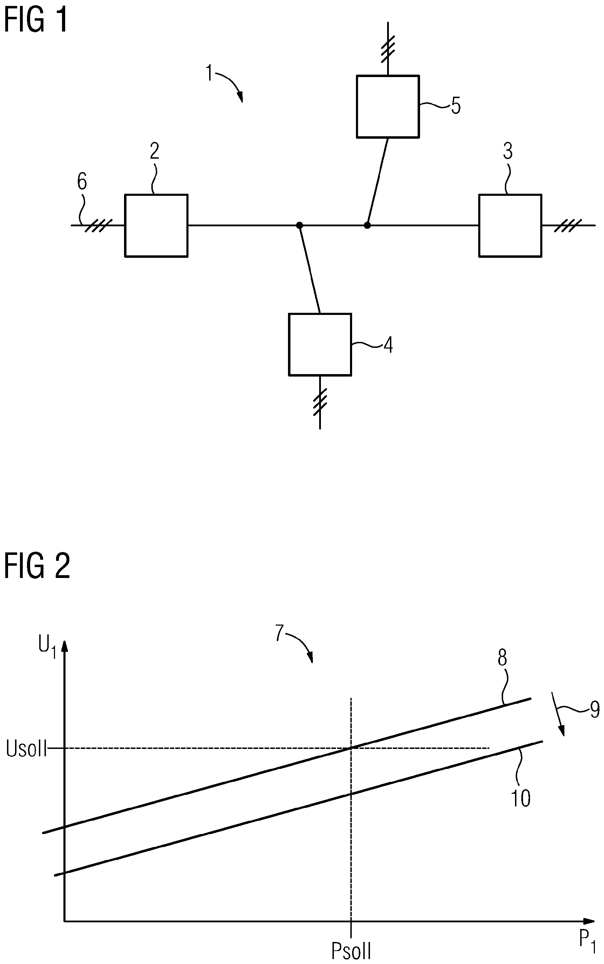

Figur 1 zeigt in schematischer Darstellung ein Beispiel für ein Gleichspannungsnetz 1, das in einer Multiterminalanordnung realisiert ist. Das Gleichspannungsnetz 1 verbindet einen ersten Umrichter 2, einen weiteren Umrichter 3, sowie zwei übrige der vier Umrichter, nämlich einen dritten Umrichter 4 und einen vierten Umrichter 5. Alle in Figur 1 dargestellten Umrichter sind gleichspannungsseitig an das Gleichspannungsnetz 1 und wechselspannungsseitig an jeweils ein Wechselspannungsnetz gebunden. In dem in Figur 1 dargestellten Ausführungsbeispiel arbeitet der erste Umrichter 2 als Wechselrichter. Der erste Umrichter 2 überträgt demnach elektrische Leistung aus dem Gleichspannungsnetz 1 in das dem ersten Umrichter zugeordnete Wechselspannungsnetz 6. Das erfindungsgemäße Verfahren kann für einen oder mehrere der Umrichter 3 - 5 durchgeführt werden.

Figur 2 zeigt ein Beispiel einer Statik 7, die dem ersten Umrichter 2 der Figur 1 zugeordnet wird. Die Statik 7 ist eine Spannungs-Leistungsstatik. Die Statik 7 ist in einem Diagramm grafisch dargestellt. Auf einer Abszisse P des Diagramms ist die am ersten Umrichter übertragene Leistung dargestellt. An der Ordinate U des Diagramms ist die am ersten Umrichter 2 einzustellende Spannung aufgetragen. Mit Psoll ist im Diagramm der momentan vorgegebene Leistungssollwert gekennzeichnet. Mit Usoll ist in dem Diagramm die momentan vorgegebene Sollspannung angedeutet. Die Statik wird durch eine Regelkennlinie definiert. Die Regelkennlinie ist im dargestellten Ausführungsbeispiel linear und im Diagramm durch eine Gerade gegeben, die eine vorbestimmte Steigung aufweist und durch den durch die Sollleistung Psoll und die Sollspannung Usoll gegebenen Punkt verläuft.

Die Korrektur der Statik 7 kann mittels einer Parallelverschiebung der Regelkennlinie, wie in Figur 2 dargestellt, durchgeführt werden. Hierzu wird die Regelkennlinie 8 beispielsweise in Richtung des Pfeils 9 verschoben. Auf diese Weise wird eine neue korrigierte Regelkennlinie 10 generiert.

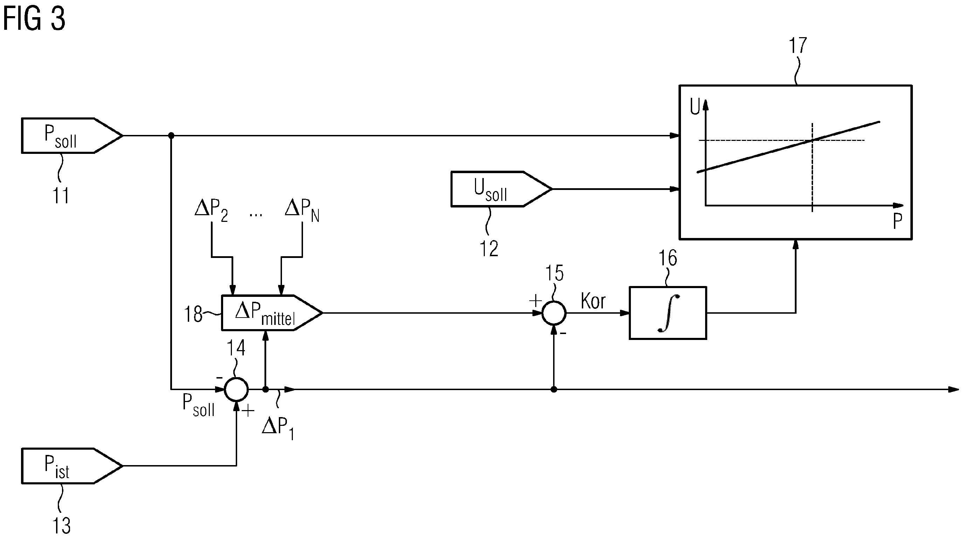

Figur 3 illustriert schematisch den Regelungsvorgang des ersten Umrichters sowie die Korrektur der Statik. Zur Regelung des ersten Umrichters werden eine Leistungssollwertvorgabe 11, die einen Leistungssollwert Psoll liefert, sowie eine Spannungssollwertvorgabe 12, die einen ersten Spannungssollwert Usoll liefert, verwendet. Zugleich wird der Leistungsistwert Pist am Umrichter mittels einer Messvorrichtung 13 gemessen. Der Leistungsistwert Pist und der Leistungssollwert Psoll werden mittels eines Differenzbildners 14 miteinander verglichen, und daraus eine Regeldifferenz $\Delta P1$ gebildet (in diesem Fall ersetzt $\Delta P1$ die allgemeine Bezeichnung $\Delta X1$). Der Regelfehler $\Delta P1$ wird anschließend einerseits an die übrigen Umrichter des Gleichspannungsnetzes weitergeleitet und andererseits an einen Differenzbildner 15 und einen Mittelwertbildner 18. Mittels des Differenzbildners 15 wird der Regelfehler $\Delta P1$ des ersten Umrichters mit einem zuvor berechneten Mittelwert $\Delta P$mittel der lokalen Regelfehler $\Delta P1$, $\Delta P2$ $\Delta PN$ verglichen. Dabei werden die Regelfehler $\Delta P2...\Delta PN$ als Differenzen von den jeweiligen Umrichtern zugeordneten Leistungssoll- und -istwerten berechnet. Der Regelfehler $\Delta P1$ kann zuvor mittels eines Tiefpassfilters zusätzlich gefiltert werden (nicht dargestellt). Am Ausgang des Differenzbildners 15 wird auf diese Weise die Korrekturgröße Kor bestimmt. Die Korrekturgröße Kor wird anschließend mittels eines Integrators 16 weiterverarbeitet und an ein geeignetes Kennlinienglied weitergegeben. Das Kennlinienglied 17 erhält also als Eingang einerseits die den Leistungssollwert Psoll und den Spannungssollwert Usoll sowie andererseits die integrierte Korrekturgröße Kor. Aus der Eingangsinformation ermittelt das Kennlinienglied die durchzuführende Verschiebung der Regelkennlinie Statik.

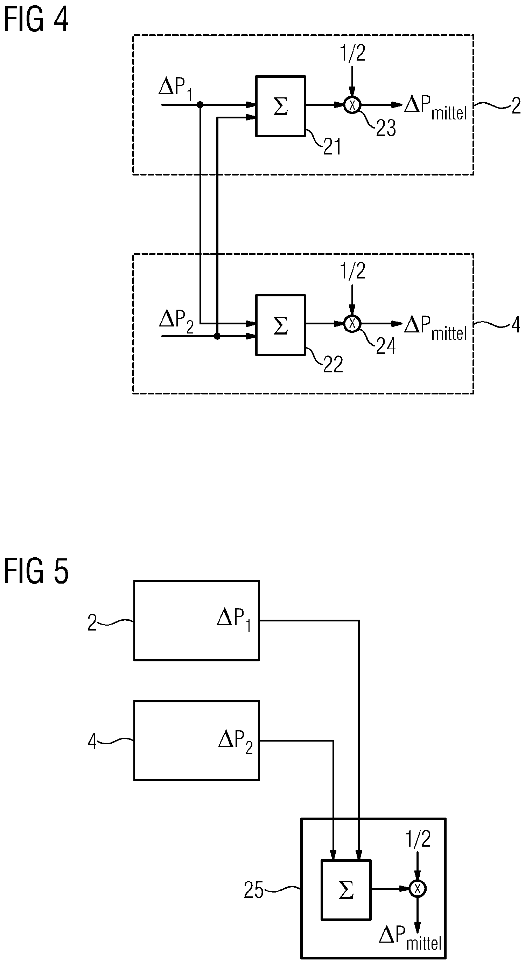

Figur 4 zeigt ein Beispiel der Berechnung des Mittelwertes der lokalen Regelfehler. Im dargestellten Beispiel sind die lokalen Regelfehler lokale Leistungsfehler: $\Delta P1$, $\Delta P2$ Der erste Umrichter 2 umfasst eine Recheneinheit 21. Die Recheneinheit beinhaltet ein Summationsglied. Der lokale Leistungsfehler $\Delta P1$ des ersten Umrichters 2 wird gemessen und anschließend an die Recheneinheit 21 und an eine baugleiche Recheneinheit 22 des weiteren Umrichters 4 weitergeleitet. Zugleich wird ein lokaler Leistungsfehler $\Delta P2$ des zweiten Umrichters 4 ermittelt und an die Recheneinheit 21 des ersten Umrichters sowie an die Recheneinheit 22 des zweiten Umrichters weitergeleitet. Dort werden die lokalen Regelfehler jeweils summiert und mittels eines entsprechenden Normierungsgliedes 23 bzw. 24 auf die Anzahl der berechneten Regelfehler, im vorliegenden Beispiel 2, normiert. Auf diese Weise wird der Mittelwert $\Delta P$mittel der lokalen Regelfehler sowohl im ersten Umrichter 2 als auch im zweiten Umrichter 4 berechnet.

Figur 5 zeigt ein alternatives Beispiel der Berechnung des Mittelwertes $\Delta P$mittel. In diesem Ausführungsbeispiel wird der ermittelte lokale Leistungsfehler $\Delta P1$ der ersten Umrichters und der ermittelte lokale Leistungsfehler $\Delta P2$ des zweiten Umrichters 4 jeweils an eine zentrale Rechenstation 25 weitergeleitet. Die zentrale Rechenstation 25 berechnet dann den Mittelwert ΔPmittel der lokalen Leistungsfehler.

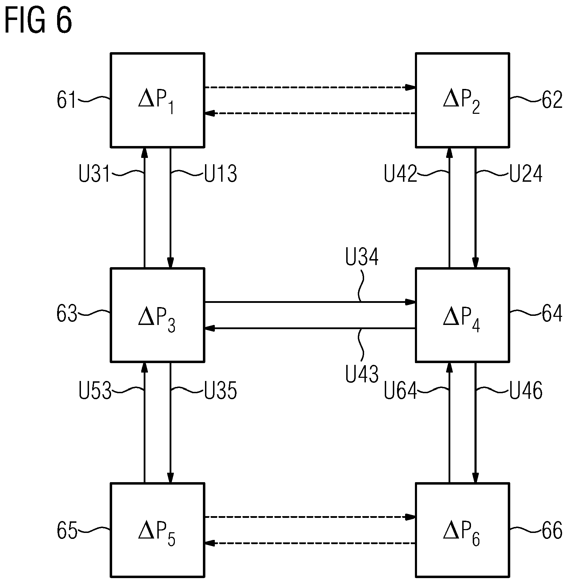

Anhand eines in Figur 6 dargestellten Beispiels soll die Mittelwertberechnung gemäß einer iterativen Methode erläutert werden. Gemäß dem dargestellten Beispiel umfasst das Gleichspannungsnetzwerk sechs Umrichter 61 bis 66, die miteinander kommunizieren, also Informationen austauschen können. Zur Berechnung des Mittelwertes der lokalen Leistungsfehler ΔPmittel werden jedoch nicht alle Kommunikationswege zwischen den Umrichtern 61 bis 66 genutzt. Vielmehr sind die Kommunikationswege derart gewählt, das ein Kommunikationsnetzwerk entsteht, dessen Netzwerkknoten durch die Umrichter 61 bis 66 und dessen Netzwerkkanten durch die genutzten Kommunikationswege zwischen den Umrichtern 61 bis 66 definiert sind, wobei das Kommunikationsnetzwerk keine Maschen aufweist. Beispielsweise sind durch gestrichelte Pfeile nicht genutzte Kommunikationswege angedeutet.

Die Umrichter übermitteln einander zuvor berechnete Übertragungsgrößen. Die Übertragungsgrößen enthalten Information über die lokalen Leistungsfehler der Umrichter und sind in Figur 6 mit Ujk bezeichnet, wobei j und k jeweils den Umrichtern zugeordnete Indizes sind. So ist in Figur 6 beispielsweise die vom Umrichter 61 an den Umrichter 62 übertragene Übertragungsgröße mit U12 bezeichnet. Es ist zu beachten, dass im Allgemeinen Ujk ungleich Ukj ist.

Die Berechnung des Mittelwertes ΔPmittel der Leistungsfehler wird in diesem Beispiel iterativ durchgeführt, wobei mehrere Zwischengrößen in jedem der Umrichter 61 bis 66 zu ermitteln sind.

Zunächst soll dies im Folgenden am Beispiel des Umrichters 61 im Detail erläutert werden. Der Umrichter 61 kommuniziert lediglich mit dem Umrichter 63. Im ersten Schritt wird eine Teilkorrekturgröße des Umrichters 61 berechnet: T1 = ΔP1 + S1. Dabei bezeichnet ΔP1 den lokalen Leistungsfehler und S1 eine Summengröße des Umrichters 61. Die Summengröße ist die Summe aller an den Umrichter 61 übertragenen Übertragungsgrößen. Da gemäß dem definierten, in Figur 6 mittels durchgezogener Pfeile illustrierten Kommunikationsnetzwerk der Umrichter 61 lediglich mit einem einzigen Umrichter, nämlich mit dem Umrichter 63 kommuniziert, ist in diesem Fall S1 = U31, wobei U31 die vom Umrichter 63 an den Umrichter 61 übertragene Übertragungsgröße bezeichnet. Im nächsten Schritt wird eine aus der Teilkorrekturgröße abgeleitete Übertragungsgröße U13 an den Umrichter 63 übertragen. Die Ableitung der Übertragungsgröße U13 erfolgt dabei gemäß der Formel U13 = T1 - U31. Anschließend kann die Teilkorrekturgröße T1 neu berechnet werden, wobei bei der Neuberechnung eine neu berechnete und übertragene Übertragungsgröße U31 verwendet wird.

Für den Umrichter 63 verläuft das Verfahren wie folgt. Eine Teilkorrekturgröße T3 wird gemäß der Formel T3 = S3 + ΔP3 berechnet. S3 bezeichnet eine Summengröße und ΔP3 einen lokalen Fehler des Umrichters 63. Die Summengröße S3 ergibt sich gemäß als Summe der Übertragungsgrößen der Umrichter 61, 64 und 65, die gemäß dem definierten Kommunikationsnetzwerk in Figur 6 mit dem Umrichter 63 kommunizieren: S3 = U13 + U43 + U53. Aus der Teilkorrekturgröße werden anschließend die an die Umrichter 61, 64 und 65 zu übertragenden Übertragungsgrößen U31, U34 und U35 berechnet: U31 = T3 - U13, U34 = T3 - U43, U35 = T3 - U53. Diese Übertragungsgrößen dienen dazu, in den Umrichtern 61, 64 und 65 deren Teilkorrekturgrößen T1, T4 bzw. T5 neu zu berechnen.

Gemäß dem in Figur 6 illustrierten Verfahren zur Berechnung des Mittelwertes ΔPmittel müssen die Teilkorrekturgrößen T1 bis T6 in mehreren Schritten iterativ bestimmt werden. Nach einer gewissen Anzahl von Iterationsschritten nähern sich die normierten Teilkorrekturgrößen T1/N bis T6/N, wobei N der Anzahl der Umrichter im definierten Kommunikationsnetzwerk entspricht (im in Figur 6 dargestellten Beispiel ist N = 6), dem zu bestimmenden Wert von ΔPmittel, wobei auf diese Weise in jedem der Umirchter 61 bis 66 der gleiche Wert von ΔPmittel ermittelt werden kann.

Aus dem berechneten Wert für ΔPmittel kann die Korrektur der Statik für jeden der Umrichter 61 bis 66 gemäß dem bereits beschriebenen Verfahrens abgeleitet werden.

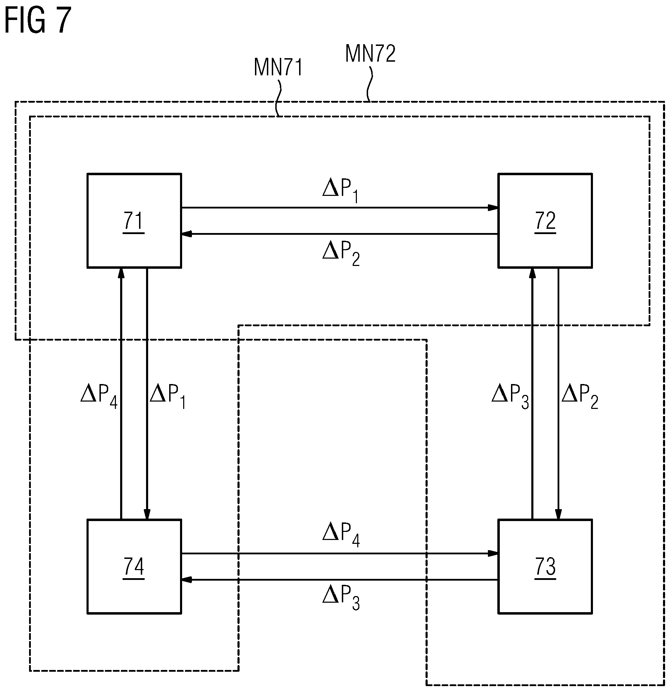

Figur 7 illustriert ein alternatives Beispiel zur Bestimmung der Korrekturgröße Kor. Im dargestellten Ausführungsbeispiel verbindet das Gleichspannungsnetz einen ersten Umrichter 71, einen zweiten Umrichter 72, einen dritten Umrichter 73 sowie einen vierten Umrichter 74. An jedem der Umrichter werden ein Leistungssollwert Psoll71, Psoll72, Psoll73 bzw. Psoll74 sowie ein Spannungssollwert Usoll71, Usoll72, Usoll73 bzw. Usoll74 vorgegeben. Jedem der vier Umrichter wird zudem eine Spannungs-Leistungsstatik zugeordnet. Aus den Leistungssollwerten und gemessenen Leistungsistwerten werden für jeden der Umrichter 71, 72, 73, bzw. 74 lokale Regelfehler in Form lokaler Leistungsfehler ΔP71, ΔP72, ΔP73 bzw. ΔP74 berechnet. Die Umrichter können die lokalen Leistungsfehler jeweils an die übrigen Umrichter übermitteln, was in Figur 7 durch entsprechende Pfeile angedeutet ist.

Für jeden der Umrichter wird eine Menge von Nachbarstationen definiert. In Figur 7 sind zwei Mengen von Nachbarumrichtern angedeutet: Eine Menge MN71 von Nachbarumrichtern für den ersten Umrichter 71 und eine Menge MN72 von Nachbarumrichtern für den zweiten Umrichter 72. Die Menge MN71 umfasst den zweiten Umrichter 72 und den vierten Umrichter 74. Die Menge MN72 umfasst den ersten Umrichter 71 und den dritten Umrichter 73. Auf entsprechende Weise werden auch die Mengen von Nachbarumrichtern für die übrigen Umrichter definiert. Für die Funktionsweise der Bestimmung der Korrekturgröße ist es in diesem Fall notwendig, dass sich die Mengen der Nachbarumrichter für die vier Umrichter in Figur 7 überlappen. Der Umrichter 71 berechnet die Korrekturgröße Kor71 aus den dem Umrichter 71 zur Verfügung stehenden Informationen über die lokalen Regelfehler der Umrichter, die von der Menge MN71 umfasst sind.

Im Einzelnen gilt: Kor71 = (½ * ($\Delta$P72 + $\Delta$P74) - $\Delta$P71) * N71, wobei N71 ein geeigneter Normierungsfaktor ist, der im dargestellten Ausführungsbeispiel gleich der Anzahl der von der Menge MN71 umfassten Umrichter ist.

Der Umrichter 72 berechnet die Korrekturgröße Kor72 aus den dem zweiten Umrichter 72 zur Verfügung stehenden Informationen über die lokalen Regelfehler der Umrichter, die von der Menge MN72 umfasst sind.

Im Einzelnen gilt: Kor72 = (½ * ($\Delta$P71 + $\Delta$P73) - $\Delta$P72) * N72, wobei N72 ein geeigneter Normierungsfaktor ist, der im dargestellten Ausführungsbeispiel gleich der Anzahl der von der Menge MN72 umfassten Umrichter ist.

Entsprechend können auch die Korrekturgrößen für den dritten Umrichter 73 und den vierten Umrichter 74 bestimmt werden.

Die ermittelten Korrekturgrößen werden anschließend weiterverarbeitet, wie in Figur 3 dargestellt, um eine Korrektur der den Umrichtern zugeordneten Statiken durchzuführen. Bei positiven Korrekturgrößen wird die Statik so verschoben, dass sich die Leistung erhöht, bei negativen Korrekturgrößen wird die Statik so verschoben, dass sich die Leistung verringert.

**Patentansprüche**

1. Verfahren zur Regelung eines ersten Umrichters in einem eine Mehrzahl von Umrichtern verbindenden Gleichspannungsnetz, bei dem

    - wenigstens dem ersten Umrichter eine Statik für eine Regelgröße (P1) des ersten Umrichters zugeordnet wird,
    - jedem der Umrichter ein lokaler Regelfehler ($\Delta$P1, $\Delta$P2...$\Delta$PN) zugeordnet wird, wobei der lokale Regelfehler ($\Delta$P1, $\Delta$P2...$\Delta$PN) jeweils einer Differenz zwischen einem am Umrichter gemessenen Istgrößenwert und einem dem Umrichter zugeordneten Sollgrößenwert entspricht, **dadurch gekennzeichnet, dass**
    - die Statik des ersten Umrichters in Abhängigkeit von einer Korrekturgröße (Kor) korrigiert wird, wobei
    - die Korrekturgröße (Kor) als eine Differenz zwischen einer Vergleichsgröße ($\Delta$Pmittel) und dem lokalen Regelfehler ($\Delta$P1) des ersten Umrichters gebildet wird, wobei
    - die Vergleichsgröße ($\Delta$Pmittel) von einem lokalen Regelfehler ($\Delta$P2) mindestens eines weiteren Umrichters abgeleitet wird, und wobei

    die Statik derart korrigiert wird, dass sich der Absolutbetrag der Korrekturgröße (Kor) verringert.

2. Verfahren nach Anspruch 1, wobei die Statik eine Spannungs-Leistungsstatik ist und die Regelgröße (P1) einer am ersten Umrichter übertragenen elektrischen Leistung entspricht.

3. Verfahren nach Anspruch 2, wobei die Statik durch eine lineare Regelkennlinie gegeben ist und die Korrektur einer Parallelverschiebung der Regelkennlinie entspricht.

4. Verfahren nach einem der Ansprüche 1 bis 3, wobei die lokalen Regelfehler lokale Leistungsfehler sind.

5. Verfahren nach einem der Ansprüche 1 bis 3, wobei die lokalen Regelfehler lokale Spannungsfehler sind.

6. Verfahren nach einem der Ansprüche 1 bis 3, wobei die lokalen Regelfehler Linearkombinationen lokaler Leistungsfehler und lokaler Spannungsfehler sind.

7. Verfahren nach einem der vorangehenden Ansprüche, wobei die Vergleichsgröße ($\Delta$Pmittel) einem Mittelwert der lokalen Regelfehler ($\Delta$P1, $\Delta$P2...$\Delta$PN) entspricht.

8. Verfahren nach Anspruch 7, wobei der lokale Regelfehler des weiteren Umrichters an den ersten Umrichter übertragen wird und der Mittelwert mittels eines Mittelwertbildners des ersten Umrichters berechnet wird.

9. Verfahren nach Anspruch 7, wobei die lokalen Regelfehler an eine zentrale Master-Station übertragen werden und der Mittelwert in der zentralen Master-Station berechnet wird.

10. Verfahren nach Anspruch 7, wobei der Mittelwert iterativ berechnet wird, indem

    - eine Teilkorrekturgröße des ersten Umrichters berechnet wird, wobei die Teilkorrekturgröße des ersten Umrichters gleich der Summe des lokalen Regelfehlers ($\Delta$P1) des ersten Umrichters und einer Summengröße des ersten Umrichters ist, wobei die Summengröße des ersten Umrichters von einer zuvor berechneten, an den ersten Umrichter übertragenen Übertragungsgröße (U21) des weiteren Umrichters abhängig ist,
    - eine vom ersten Umrichter an den weiteren Umrichter zu übertragende Übertragungsgröße (U12) als Differenz zwischen der Teilkorrekturgröße des ersten Umrichters und der vom weiteren Umrichter an den ersten Umrichter übertragenen Übertragungsgröße (U21) berechnet wird und diese anschließend an den weiteren Umrichter übertragen wird,

- eine Teilkorrekturgröße des weiteren Umrichters als Summe des lokalen Regelfehlers (ΔP2) des weiteren Umrichters und einer Summengröße des weiteren Umrichters neu berechnet wird, wobei die Summengröße des weiteren Umrichters von der vom ersten Umrichter übertragenen Übertragungsgröße (U12) abhängig ist,

- die an den ersten Umrichter zu übertragende Übertragungsgröße (U21) des weiteren Umrichters als Differenz zwischen der Teilkorrekturgröße des weiteren Umrichters und der vom ersten Umrichter an den weiteren Umrichter übertragenen Übertragungsgröße (U12) neu berechnet wird und diese anschließend an den ersten Umrichter übertragen wird und

- der Mittelwert nach einer vorbestimmten Anzahl von Iterationsschritten durch Normierung der Teilkorrekturgröße des ersten Umrichters abgeleitet wird.

11. Verfahren nach einem der Ansprüche 1 bis 6, wobei die Korrekturgröße (Kor) aus den lokalen Regelfehlern wenigstens zweier weiterer Umrichter als Differenz zwischen einem Mittelwert der Regelfehler der wenigstens zwei weiteren Umrichter und dem Regelfehler des ersten Umrichters gebildet wird.

12. Verfahren nach einem der vorangehenden Ansprüche, wobei mehreren Umrichten des Gleichspannungsnetzes zugeordnete Statiken korrigiert werden, wobei die Korrekturen unter der Bedingung erfolgen, dass eine Gesamtleistung im Gleichspannungsnetz konstant bleibt.

13. Vorrichtung zum Übertragen elektrischer Leistung umfassend ein Gleichspannungsnetz, das eine Mehrzahl von Umrichtern verbindet, **gekennzeichnet durch** eine Regelungseinheit, die dazu eingerichtet ist, ein Verfahren nach einem der Ansprüche 1 bis 12 durchzuführen.

**Claims**

1. Method for controlling a first converter in a DC voltage network connecting a plurality of converters, in which

- a droop for a control variable (P1) of the first converter is assigned at least to the first converter,
- a local control error (ΔP1, ΔP2...ΔPN) is assigned to each of the converters, wherein the local control error (ΔP1, ΔP2...ΔPN) corresponds in each case to a difference between an actual variable value measured at the converter and a target variable value assigned to the converter,

**characterized in that**

- the droop of the first converter is corrected depending on a correction variable (Kor), wherein
- the correction variable (Kor) is formed as a difference between a comparison variable (ΔPaverage) and the local control error (ΔP1) of the first converter, wherein
- the comparison variable (ΔPaverage) is derived from a local control error (ΔP2) of at least one further converter, and wherein

the droop is corrected in such a way that the absolute magnitude of the correction variable (Kor) decreases.

2. Method according to Claim 1, wherein the droop is a voltage-power droop and the control variable (P1) corresponds to an electrical power transmitted at the first converter.

3. Method according to Claim 2, wherein the droop is given by a linear control characteristic curve and the correction corresponds to a parallel shift of the control characteristic curve.

4. Method according to one of Claims 1 to 3, wherein the local control errors are local power errors.

5. Method according to one of Claims 1 to 3, wherein the local control errors are local voltage errors.

6. Method according to one of Claims 1 to 3, wherein the local control errors are linear combinations of local power errors and local voltage errors.

7. Method according to one of the preceding claims, wherein the comparison variable (ΔPaverage) corresponds to an average value of the local control errors (ΔP1, ΔP2...ΔPN).

8. Method according to Claim 7, wherein the local control error of the further converter is transmitted to the first converter and the average value is calculated by means of an averager of the first converter.

9. Method according to Claim 7, wherein the local control errors are transmitted to a central master station and the average value is calculated in the central master station.

10. Method according to Claim 7, wherein the average value is calculated iteratively, by virtue of

- a partial correction variable of the first converter being calculated, wherein the partial correction variable of the first converter is equal to the sum of the local control error ($\Delta P1$) of the first converter and to a sum variable of the first converter, wherein the sum variable of the first converter is dependent on a previously calculated transmission variable ($U21$) sof the further converter transmitted to the first converter,

- a transmission variable ($U12$) to be transmitted from the first converter to the further converter being calculated as the difference between the partial correction variable of the first converter and the transmission variable ($U21$) transmitted from the further converter to the first converter and said difference subsequently being transmitted to the further converter,

- a partial correction variable of the further converter being calculated again as the sum of the local control error ($\Delta P2$) of the further converter and of a sum variable of the further converter, wherein the sum variable of the further converter is dependent on the transmission variable ($U12$) transmitted by the first converter,

- the transmission variable ($U21$) of the further converter to be transmitted to the first converter being calculated again as the difference between the partial correction variable of the further converter and the transmission variable ($U12$) transmitted from the first converter to the further converter and said difference subsequently being transmitted to the first converter and

- the average value being derived by normalization of the partial correction variable of the first converter after a predetermined number of iteration steps.

11. Method according to one of Claims 1 to 6, wherein the correction variable (Kor) from the local control errors of at least two further converters is formed as the difference between an average value of the control errors of the at least two further converters and the control error of the first converter.

12. Method according to one of the preceding claims, wherein droops assigned to a plurality of converters of the DC voltage network are corrected, wherein the corrections take place on condition that a total power in the DC voltage network remains constant.

13. Device for transmitting electrical power comprising a DC voltage network, which connects a plurality of converters, **characterized by** a control unit, which is configured to carry out a method according to one of Claims 1 to 12.

## Revendications

1. Procédé de régulation d'un premier convertisseur dans un réseau de tension continue reliant une pluralité de convertisseurs, dans lequel

   - on associe, au moins au premier convertisseur, une statique pour une grandeur (P1) de régulation du premier convertisseur,
   - on associe, à chaque convertisseur, une erreur ($\Delta P1$, $\Delta P2...\Delta PN$) de régulation locale, l'erreur ($\Delta P1$, $\Delta P2...\Delta PN$) de régulation locale correspondant respectivement à une différence entre une valeur de grandeur réelle mesurée sur le convertisseur et une valeur de grandeur de consigne affectée au convertisseur,

   **caractérisé en ce que**

   - on corrige la statique du premier convertisseur en fonction d'une grandeur (Kor) de correction, dans lequel
   - on forme la grandeur (Kor) de correction sous la forme d'une différence entre une grandeur ($\Delta Pmittel$) de comparaison et l'erreur ($\Delta P1$) de régulation locale du premier convertisseur, dans lequel
   - on déduit la grandeur ($\Delta Pmittel$) de comparaison d'une erreur ($\Delta P2$) de régulation locale d'au moins un autre convertisseur et dans lequel

   on corrige la statique de manière à diminuer la valeur absolue de la grandeur (Kor) de correction.

2. Procédé suivant la revendication 1, dans lequel la statique est une statique de puissance-tension et la grandeur (P1) de régulation correspond à une puissance électrique transmise au premier convertisseur.

3. Procédé suivant la revendication 2, dans lequel la statique est donnée par une courbe caractéristique de régulation linéaire et la correction correspond à un décalage parallèle de la courbe caractéristique de régulation.

4. Procédé suivant l'une des revendications 1 à 3, dans lequel les erreurs de régulation locale sont des erreurs de puissance locale.

5. Procédé suivant l'une des revendications 1 à 3, dans lequel les erreurs de régulation locale sont des erreurs de tension locale.

6. Procédé suivant l'une des revendications 1 à 3, dans lequel les erreurs de régulation locale sont des combinaisons linéaires d'erreurs de puissance locale et d'erreurs de tension locale.

**7.** Procédé suivant l'une des revendications précédentes, dans lequel la grandeur (ΔPmittel) de comparaison correspond à une valeur moyenne des erreurs (ΔP1, ΔP2...ΔPN) de régulation locale.

**8.** Procédé suivant la revendication 7, dans lequel on transfère l'erreur de régulation locale de l'autre convertisseur au premier convertisseur et on calcule la valeur moyenne au moyen d'un dispositif de formation de valeurs moyennes du premier convertisseur.

**9.** Procédé suivant la revendication 7, dans lequel on transfère les erreurs de régulation locale à une poste maître central et on calcule la valeur moyenne dans le poste maître central.

**10.** Procédé suivant la revendication 7, dans lequel on calcule la valeur moyenne par itération, en

- calculant une grandeur de correction partielle du premier convertisseur, la grandeur de correction partielle du premier convertisseur étant égale à la somme de l'erreur (ΔP1) de régulation locale du premier convertisseur et d'une grandeur de somme du premier convertisseur, la grandeur de somme du premier convertisseur dépendant d'une grandeur (U21) de transfert, calculée auparavant et transférée au premier convertisseur, de l'autre convertisseur,

- calculant une grandeur (U12) de transfert à transmettre du premier convertisseur à l'autre convertisseur sous la forme d'une différence entre la grandeur de correction partielle du premier convertisseur et la grandeur (U21) de transmission transférée de l'autre convertisseur au premier convertisseur et transmettant celle-ci ensuite à l'autre convertisseur,

- recalculant une grandeur de correction partielle de l'autre convertisseur sous la forme de la somme de l'erreur (ΔP2) de régulation locale de l'autre convertisseur et d'une grandeur somme de l'autre convertisseur, la grandeur somme de l'autre convertisseur dépendant de la grandeur (U12) de transfert transférée par le premier convertisseur,

- recalculant la grandeur (U21) de transfert, à transférer au premier convertisseur, de l'autre convertisseur, sous la forme d'une différence entre la grandeur de correction partielle de l'autre convertisseur et la grandeur (U12) de transfert du premier convertisseur à l'autre convertisseur et transférant celle-ci ensuite au premier convertisseur et

- déduisant la valeur moyenne suivant un nombre défini à l'avance de stades d'itération en normant la grandeur de correction partielle du premier convertisseur.

**11.** Procédé suivant l'une des revendications 1 à 6, dans lequel on forme la grandeur (Kor) de correction à partir des erreurs de régulation locale d'au moins deux autres convertisseurs sous la forme d'une différence entre une valeur moyenne de l'erreur de régulation des au moins deux autres convertisseurs et de l'erreur de régulation du premier convertisseur.

**12.** Procédé suivant l'une des revendications précédentes, dans lequel on corrige des statiques associées à plusieurs convertisseurs du réseau de tension continue, les corrections s'effectuant à condition qu'une puissance totale dans le réseau de tension continue reste constante.

**13.** Système de transmission de puissance électrique comprenant un réseau de tension continue, qui relie une pluralité de convertisseurs, **caractérisé par** une unité de régulation conçue pour effectuer un procédé suivant l'une des revendications 11 à 12.

## FIG 1

## FIG 2

FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012000549 A1